# DEMANDE DE BREVET EUROPEEN

(11) **EP 1 027 912 A1**
(43) Date de publication de la demande: **16.08.2000**
(21) Numéro de dépôt: 00400369.5
(22) Date de dépôt: 09.02.2000
(51) Int. Cl.: B01D 33/333

(54) **Tamis mécanique, en particulier tablier filtrant d'un filtre à chaînes**

(30) Priorité: 11.02.1999 FR 9901626
(71) Demandeur: E. BEAUDREY & Cie., F-75018 Paris (FR)
(72) Inventeur: Jackson, Philip, 75007 Paris (FR)
(74) Mandataire: CABINET BONNET-THIRION

(57) **Abrégé**

Il s'agit d'un tamis mécanique du genre mettant en oeuvre au moins un caisson de filtration (11) comportant, d'une part, un châssis (12), qui est en forme de cadre, et, d'autre part, un panneau filtrant (13), qui est interposé transversalement dans l'ouverture de ce châssis (12), en étant dûment assujetti à celui-ci.

Suivant l'invention, pour l'assujettissement du panneau filtrant (13) au châssis (12), interviennent, entre ce panneau filtrant (13) et ce châssis (12), des moyens d'encliquetage (25), et, préférentiellement, le panneau filtrant (13), comme les montants (23) du châssis (12) et les longerons (24A) de celui-ci, est en matière inerte à la corrosion.

Application, notamment, aux filtres à chaînes.

## Description

La présente invention concerne d'une manière générale les tamis mécaniques propres à séparer d'un flux d'eau les éventuels débris ou déchets véhiculés par celui-ci.

Elle vise plus particulièrement ceux de ces tamis mécaniques qui mettent en oeuvre au moins un caisson de filtration comportant, d'une part, un châssis, qui est en forme générale de cadre, et, d'autre part, un panneau filtrant, qui est interposé transversalement dans l'ouverture de ce châssis, en étant dûment assujetti à celui-ci, que ce panneau filtrant soit d'un seul tenant ou qu'il soit éventuellement fragmenté en panneaux filtrants fractionnaires dûment disposés côte à côte.

Par exemple, un tel tamis mécanique peut former le tablier filtrant d'un filtre à chaînes.

Il comporte alors une pluralité de caissons de filtration successivement articulés en boucle sans fin les uns aux autres, suivant des dispositions du type de celles décrites notamment dans le brevet français qui, déposé le 16 janvier 1987 sous le No 87 00429, a été publié sous le No 2 609 643.

En variante, il peut, par exemple, s'agir aussi bien d'un tambour monté rotatif, voire même d'un filtre statique.

Lorsque, s'agissant d'un filtre à chaînes ou d'un tambour rotatif, un tel tamis mécanique est mobile, chacun des caissons de filtration qu'il comporte intervient à la manière d'un auget, en retenant temporairement, et en entraînant avec lui, les débris ou déchets arrêtés par son panneau filtrant, jusqu'à ce que, au passage au droit d'un dispositif de nettoyage assurant une circulation d'eau à contre-courant à travers ce dernier, ces débris ou déchets soient dûment détachés de ce panneau filtrant et évacués.

Quoi qu'il en soit, l'une des difficultés à surmonter dans la réalisation des tamis mécaniques comportant de tels caissons de filtration tient à la nécessité qu'il y a d'assujettir convenablement à leur châssis le panneau filtrant mis en oeuvre dans celui-ci.

Le plus souvent, à ce jour, ce panneau filtrant est une toile métallique bidimensionnelle, ou une tôle perforée également bidimensionnelle, qui, entre autres, ont l'une et l'autre pour inconvénient d'être sensibles à la corrosion, et son assujettissement au châssis implique invariablement la mise en oeuvre d'éléments eux aussi métalliques, et, donc, eux aussi sensibles à la corrosion.

Plus précisément, cet assujettissement se fait usuellement par boulonnage, par serrage, à l'aide de boulons métalliques, entre un cadre solidaire du châssis et un contre-cadre formé par exemple de barrettes également métalliques.

Il en reste en pratique de même à ce jour lorsque, en variante, et tel que décrit dans le brevet français No 87 00429 déjà mentionné ci-dessus, le panneau filtrant forme un réseau tridimensionnel, qui, s'il est usuellement réalisé en métal, est cependant avantageusement susceptible d'une réalisation en matière synthétique si désiré.

Corollairement, les châssis dans lesquels interviennent de tels panneaux filtrants sont, eux-mêmes, à ce jour, généralement métalliques, en étant par exemple réalisés en acier recuit ou en acier inoxydable.

De tels châssis sont alors inévitablement relativement chers, et leur résistance à la corrosion n'est jamais totale.

Pour éviter cet inconvénient, il a été déjà proposé de réaliser les châssis en matière inerte à la corrosion, et, par exemple, en matière synthétique ou composite.

Mais, lorsqu'il en est ainsi, l'assujettissement du panneau filtrant à un tel châssis se fait, encore, de manière traditionnelle, par boulonnage.

Le coût des boulons correspondants qui, en pratique, doivent être en acier inoxydable, celui des barrettes formant contre-cadre associées à ces boulons, qui doivent être elles aussi en acier inoxydable, et celui de la main d'oeuvre nécessaire à l'assemblage de l'ensemble, constituent une part importante du coût total d'un tamis mécanique.

En outre, compte tenu des divers éléments métalliques ainsi mis en oeuvre, qui, à ce jour, englobent également le panneau filtrant, l'ensemble reste très vulnérable à la corrosion, notamment en eau stagnante.

La présente invention a d'une manière générale pour objet une disposition permettant d'éviter ces inconvénients et conduisant en outre à d'autres avantages.

De manière plus précise, elle a pour objet un tamis mécanique du genre mettant en oeuvre au moins un caisson de filtration comportant, d'une part, un châssis, qui est en forme générale de cadre, et, d'autre part, un panneau filtrant, qui est interposé transversalement dans l'ouverture de ce châssis, en étant dûment assujetti à celui-ci, ce tamis mécanique étant d'une manière générale caractérisé en ce que, pour l'assujettissement du panneau filtrant au châssis, interviennent, entre ce panneau filtrant et ce châssis, des moyens d'encliquetage.

Ainsi, tout boulonnage est avantageusement évité.

Plus précisément, toute mise en oeuvre de boulons et/ou de barrettes ou autres accessoires métalliques est évitée, au bénéfice de la résistance à la corrosion et du coût.

En outre, si, pour la maintenance de l'ensemble, il s'avère nécessaire de procéder au changement d'un panneau filtrant, un tel changement peut avantageusement se faire de manière très aisée et rapide au bénéfice des coûts, puisqu'il n'implique aucun desserrage ni aucun serrage de boulons.

Suivant un premier développement de l'invention, pour chacun des caissons de filtration mis en oeuvre, le châssis et le panneau filtrant sont l'un et l'autre eux aussi en matière inerte à la corrosion, au bénéfice de l'homogénéité de l'ensemble à cet égard.

Par exemple, le châssis est, pour l'essentiel, en matériau composite, exception faite d'éventuels boulons d'assemblage, et le panneau filtrant est lui-même intégralement en matière synthétique.

Ainsi réalisé en matière synthétique, un tel panneau filtrant est, les conditions étant égales par ailleurs, avantageusement plus léger que lorsqu'il est réalisé en métal, au bénéfice d'une moindre fatigue pour l'ensemble du tamis mécanique, notamment en ce qui concerne ses moyens d'entraînement et ses moyens de guidage, et, donc, au bénéfice d'une moindre usure pour ce tamis mécanique.

Il est en outre avantageusement plus économique.

Mais, lorsqu'il s'agit d'un réseau tridimensionnel, ce panneau filtrant est inévitablement rigide, et ne peut donc pas être fléchi, ce qui, pour sa pose, implique normalement que l'ouverture du châssis soit en tout point au moins égale à son emprise.

Le châssis doit donc normalement avoir une configuration globalement parallèlépipédique.

Suivant un autre développement de l'invention, il est tiré parti du fait que l'assujettissement du panneau filtrant au châssis se fait par encliquetage pour conférer une configuration plus avantageuse à ce châssis.

Plus précisément, il est tiré parti du fait que cet encliquetage se satisfait d'une mise en biais initiale du panneau filtrant par rapport au châssis suivie d'un pivotement de ce panneau filtrant.

Suivant ce développement de l'invention, le châssis des caissons de filtration mis en oeuvre ayant, en plan, de manière usuelle, un contour quadrangulaire, en comportant, en alternance, deux montants et deux longerons, les moyens d'encliquetage intervenant entre le panneau filtrant et un tel châssis concernent au moins les longerons de celui-ci, en ne concernant d'ailleurs préférentiellement que ces seuls longerons, et ces longerons ont, préférentiellement, en section transversale, un profil globalement cintré, dont la concavité est tournée vers l'intérieur du châssis.

Il résulte, de ce profil globalement cintré, un double avantage.

Tout d'abord, il est favorable à l'encliquetage du panneau filtrant sur le châssis, en assurant avantageusement un guidage de ce panneau filtrant lors du mouvement de pivotement qu'il suffit de lui appliquer pour cet encliquetage.

En outre, et surtout, en rendant convergents l'un vers l'autre les deux longerons du châssis, il contribue à un resserrement relatif de l'ouverture de celui-ci de nature à renforcer avantageusement la fonction d'augets des caissons de filtration, au bénéfice de la retenue, et de l'entraînement, des débris ou déchets arrêtés par leur panneau filtrant.

Ainsi se trouvent avantageusement conciliés deux objets apparemment contradictoires, à savoir une mise en place aisée du panneau filtrant malgré sa rigidité, et une configuration convergente du châssis.

Les caractéristiques et avantages de l'invention ressortiront, d'ailleurs, de la description qui va suivre, à titre d'exemple, en référence aux dessins schématiques annexés sur lesquels :
- la figure 1 est une vue en élévation latérale-coupe d'un tamis mécanique mettant en oeuvre des caissons de filtration suivant l'invention ;

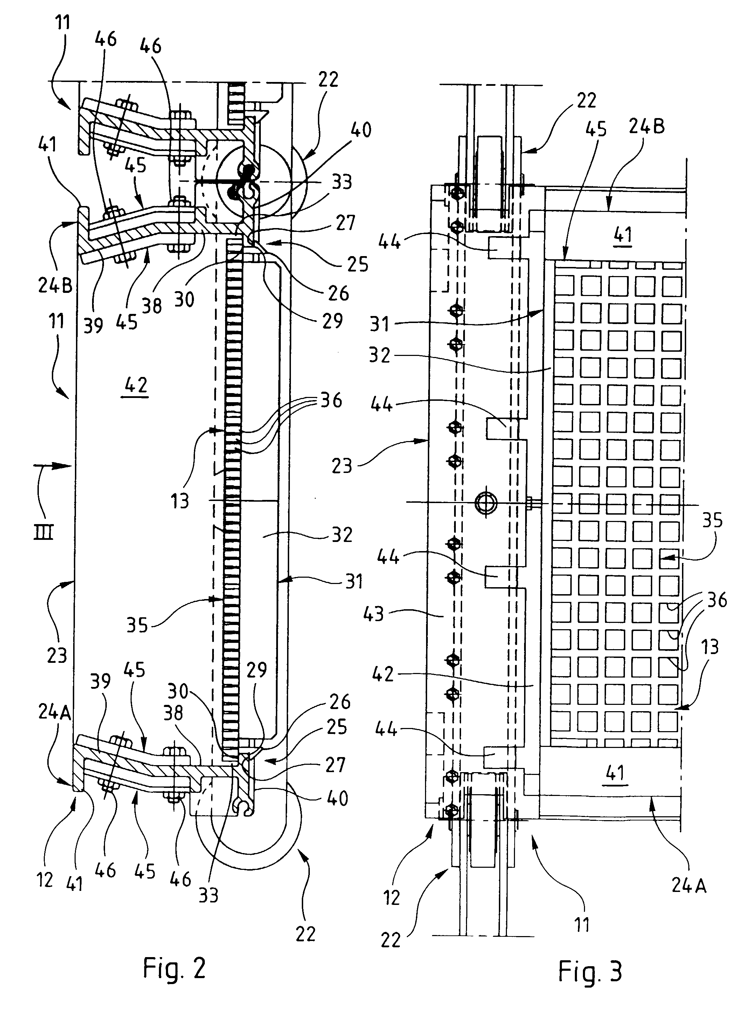

- la figure 2 reprend, à échelle supérieure, le détail de la figure 1 qui, repéré par un encart II sur cette figure 1, se rapporte plus précisément à un tel caisson de filtration ;
- la figure 3 est une vue partielle en élévation de ce caisson de filtration suivant la flèche III de la figure 2 ;
- la figure 4 en est, de manière schématique, une vue partielle en perspective ;
- la figure 5 est, à échelle différente, une vue en coupe d'un tel caisson de filtration, qui, déduite de celle de la figure 2, illustre la mise en place d'un panneau filtrant dans son châssis ;
- la figure 6 est une coupe selon VI-VI de la figure 1 ;
- les figures 7 et 8 sont analogues à la figure 6 et illustrent chacune une variante de mise en oeuvre d'un filtre à chaînes ;
- la figure 9 est analogue à la figure 4 et montre une variante de panneau filtrant.

Tel qu'illustré sur ces figures, le tamis mécanique 10 suivant l'invention met globalement en oeuvre au moins un caisson de filtration 11 comportant, d'une part, un châssis 12, qui est en forme générale de cadre, et, d'autre part, un panneau filtrant 13, qui est interposé transversalement dans l'ouverture de ce châssis 12, en étant dûment assujetti à celui-ci.

En pratique, ces figures illustrent plus particulièrement l'application de l'invention au cas où, comportant une pluralité de caissons de filtration 11 successivement articulés en boucle sans fin les uns aux autres, le tamis mécanique 10 forme le tablier filtrant d'un filtre à chaînes 14.

Ce tamis mécanique 10 s'étend, donc, en pratique, verticalement, au travers d'un chenal 15 dans lequel circule un flux d'eau 16 à traiter, en interceptant celui-ci, et, suspendu, par sa partie supérieure, qui est émergée, à une roue d'entraînement 17 qui intervient au droit d'une superstructure 18, il coopère, à sa partie inférieure, avec des moyens d'étanchéité, non représentés, qui interviennent entre lui et le fond du chenal 15.

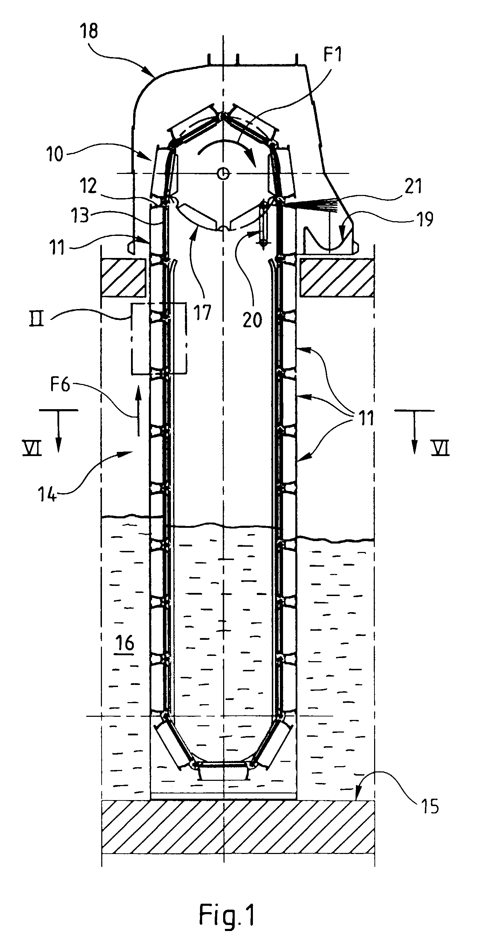

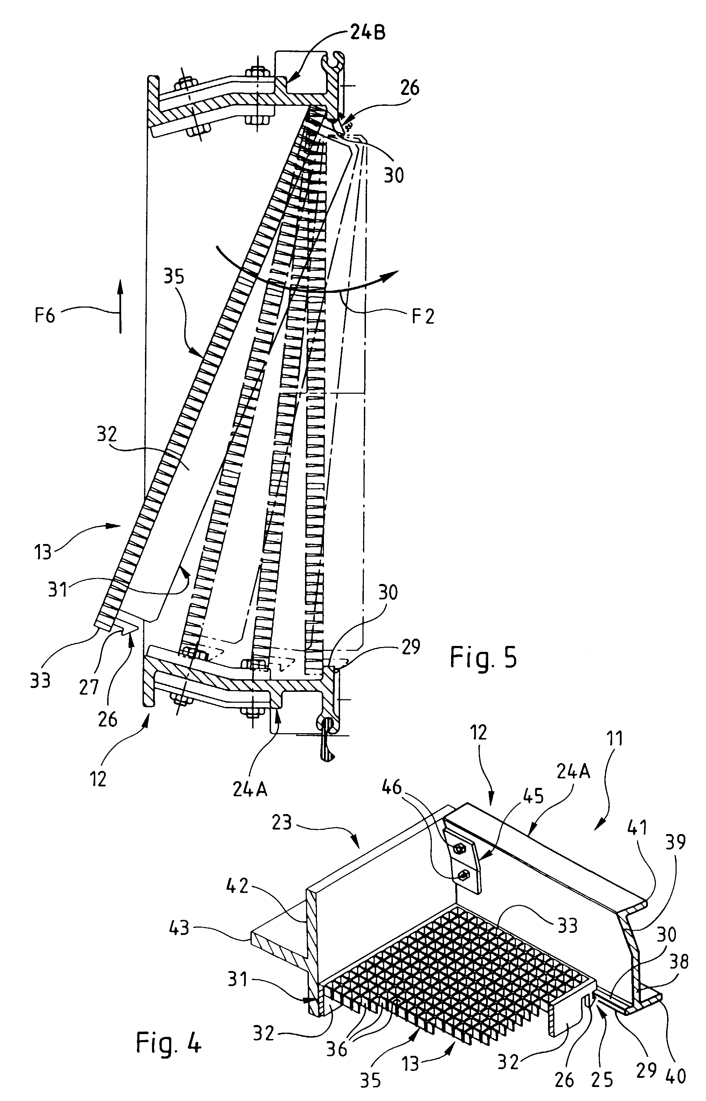

Les caissons de filtration 11 sont ouverts vers l'extérieur, et le sens de rotation de la roue d'entraînement 17, repéré par une flèche F1 sur la figure 1, est tel que le brin amont de l'ensemble se déplace de bas en haut, selon les flèches F6 des figures 1 et 5, en sorte que, intervenant à la manière d'augets, les caissons de filtration 11 de ce brin amont entraînent avec eux les débris et déchets arrêtés par leur panneau filtrant 13.

Après contournement de la roue d'entraînement 17, les caissons de filtration 11 se déchargent dans un caniveau d'évacuation 19 prévu transversalement à cet effet dans la superstructure 18, du côté du brin aval de l'ensemble, et, pour faciliter leur déchargement, ils sont soumis à un dispositif de nettoyage 20, qui, intervenant de l'intérieur, projette à contre-courant un jet d'eau 21 à travers leur panneau filtrant 13.

Les dispositions qui précèdent étant bien connues par elles-mêmes, notamment par le brevet français No 87 00429 déjà mentionné ci-dessus, et ne relevant pas en propre de la présente invention, elles ne seront pas décrites plus en détail ici.

En particulier, les moyens d'articulation 22 reliant deux à deux les caissons de filtration 11 à la manière des maillons d'une chaîne ne seront pas décrits ici.

En outre, tous les caissons de filtration 11 étant identiques entre eux, seul l'un d'eux sera décrit dans ce qui suit.

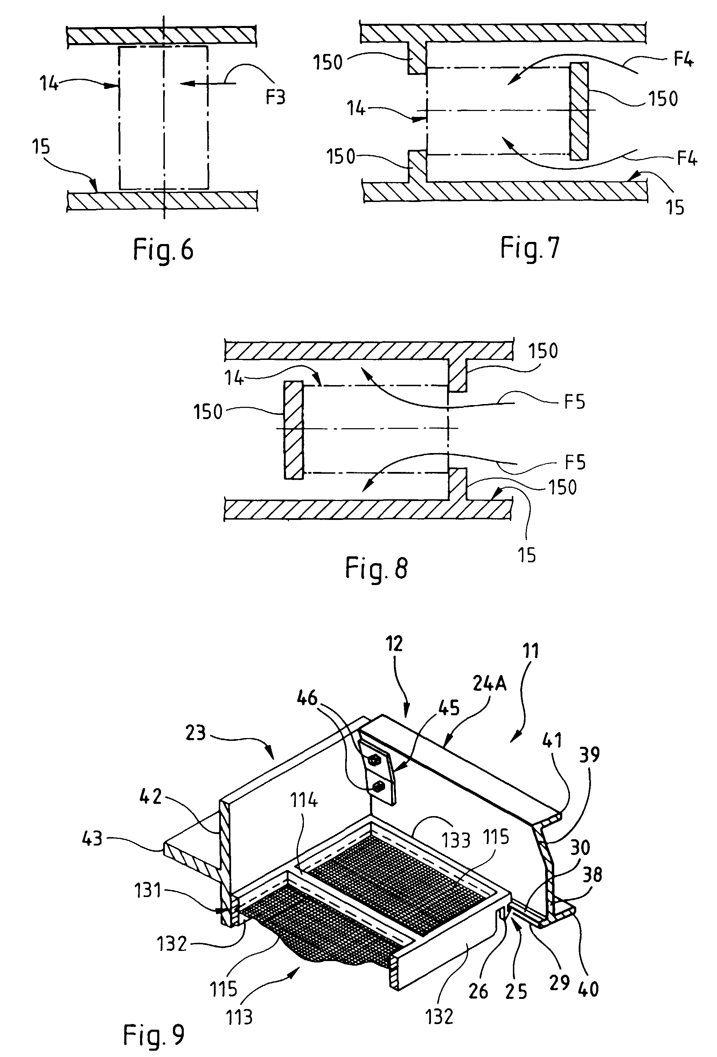

Par ailleurs, on comprendra que le filtre à chaînes 14 peut être à passage direct : c'est le cas du filtre à chaînes 14 de la figure 1, la figure 6 montrant que dans ce cas le flux d'eau à traiter, illustré par la flèche F3 sur cette figure, traverse l'ensemble du filtre.

Mais le filtre à chaînes 14 peut être également à double flux grâce à des chicanes matérialisées par des cloisons 150, figures 7 et 8 : selon la figure 7, deux flux d'eau F4 traversent le filtre de l'extérieur vers l'intérieur de celui-ci ; selon la figure 8, deux flux d'eau F5 traversent le filtre depuis l'intérieur de celui-ci vers l'extérieur.

De manière connue en soi, le châssis 12 d'un caisson de filtration 11 a, en plan, un contour quadrangulaire, et, en pratique, rectangulaire, en comportant, en alternance, deux montants 23, qui s'étendent parallèlement au sens de déplacement de l'ensemble, et deux longerons 24A, 24B, qui s'étendent perpendiculairement à ce sens de déplacement.

Le panneau filtrant 13 associé a, lui-même, en plan, un contour quadrangulaire complémentaire, et il intervient sensiblement à la base des montants 23 et des longerons 24A, 24B.

Si désiré, ce panneau filtrant 13 peut couvrir d'un seul tenant toute l'ouverture du châssis 12 formée par ces montants 23 et ces longerons 24A, 24B.

Mais, préférentiellement, notamment pour des questions de facilité de réalisation et de mise en place, et ainsi qu'il ressort de la figure 4, ce panneau filtrant 13 est fragmenté en panneaux filtrants fractionnaires dûment disposés côte à côte.

Cependant, par mesure de commodité, il sera tout d'abord considéré dans ce qui suit qu'un seul panneau filtrant 13 est prévu dans l'ouverture du châssis 12 d'un caisson de filtration 11.

Suivant l'invention, pour l'assujettissement de ce panneau filtrant 13 à ce châssis 12, interviennent, entre ce panneau filtrant 13 et ce châssis 12, des moyens d'encliquetage 25.

Dans la forme de réalisation représentée, ces moyens d'encliquetage 25 comportent, ici sur le panneau filtrant 13, au moins une patte d'encliquetage 26, qui, présentant un cran 27, est globalement conformée en crochet, et, sur le châssis 12, un épaulement 29, avec lequel le panneau filtrant 13 est en prise par le cran 27 de sa patte d'encliquetage 26.

Selon une variante non représentée, les structures sont inversées, à savoir la patte d'encliquetage 26 est portée par le châssis 12 et l'épaulement 29 ménagé sur le panneau filtrant 13.

Plus précisément, dans la forme de réalisation représentée, la patte d'encliquetage 26 du panneau filtrant 13 est en retrait par rapport à l'un des côtés de ce panneau filtrant 13, et l'épaulement 29 du châssis 12 appartient à une nervure 30, qui fait saillie vers l'intérieur dans l'ouverture de ce châssis 12, sur le côté correspondant de celui-ci, et sur laquelle le panneau filtrant 13 prend appui.

En pratique, le panneau filtrant 13 comporte quatre pattes d'encliquetage 26, qui, par paire, sont chacune respectivement disposées aux extrémités de deux de ses côtés opposés, tout en étant en retrait par rapport à ceux-ci.

Dans la forme de réalisation représentée, le panneau filtrant 13 présente un cadre 31 à sa périphérie, et les pattes d'encliquetage 26 qu'il comporte appartiennent à ce cadre 31.

Plus précisément, elles sont formées dans le plan même de deux côtés 32 opposés de ce cadre 31, tout en étant en retrait par rapport aux deux autres côtés 33 de celui-ci.

Pour chacun des côtés 32 du cadre 31 dans lesquels les pattes d'encliquetage 26 sont formées, les deux pattes d'encliquetage 26 présentes aux extrémités d'un tel côté 32 s'étendent globalement dos à dos.

Pour chacun des côtés 33 vis-à-vis desquels les pattes d'encliquetage 26 sont en retrait, les deux pattes d'encliquetage 26 présentes aux extrémités d'un tel côté 33 sont au contraire globalement parallèles l'une à l'autre.

Pour le reste, le panneau filtrant 13 forme, par exemple, à l'intérieur du cadre 31, un réseau tridimensionnel 35 d'ouvertures 36 du type de celui décrit dans le brevet français No 87 00429 déjà mentionné ci-dessus.

Il est alors inévitablement relativement rigide.

Préférentiellement, le panneau filtrant 13 ainsi constitué est en matière inerte à la corrosion.

Par exemple, il est intégralement en matière synthétique moulée.

Préférentiellement, également, les moyens d'encliquetage 25 intervenant entre ce panneau filtrant 13 et le châssis 12 concernent, au moins, les longerons 24A et 24B de ce châssis 12.

Dans la forme de réalisation représentée, ces moyens d'encliquetage 25 n'intéressent d'ailleurs que les seuls longerons 24A et 24B du châssis 12.

Autrement dit, il n'est prévu une nervure 30 qu'à la base de chacun de ces longerons 24A, 24B, et, par les côtés 33 de son cadre 31 vis-à-vis desquels ses pattes d'encliquetage 26 sont en retrait, le panneau filtrant 13 s'étend de l'un à l'autre de ces longerons 24A et 24B.

Lorsque, comme en l'espèce, le panneau filtrant 13 est fragmenté en panneaux filtrants fractionnaires disposés côte à côte, ceux-ci s'étendent chacun d'un seul tenant de l'un à l'autre des deux longerons 24A et 24B du châssis 12, suivant les mêmes modalités que celles décrites ci-dessus pour un panneau filtrant 13 d'un seul tenant.

Préférentiellement, et cela est le cas dans la forme de réalisation représentée, les longerons 24A et 24B du châssis 12 ont, en section transversale, un profil globalement cintré dont la concavité est tournée vers l'intérieur de ce châssis 12.

Plus précisément, dans cette forme de réalisation, chacun des longerons 24A et 24B du châssis 12 comporte, successivement, en dièdre, à compter du panneau filtrant 13, un premier pan 38, qui s'étend sensiblement perpendiculairement au panneau filtrant 13, et un deuxième pan 39, qui, oblique par rapport au panneau filtrant 13, va en convergeant avec le deuxième pan 39 de l'autre longeron au fur et à mesure qu'il s'éloigne du panneau filtrant 13.

Par exemple, l'angle du dièdre formé intérieurement par ces deux pans 38, 39 est de l'ordre de 160 degrés lorsque les côtés 32 du cadre 31 ont une longueur de l'ordre de 600 millimètres.

Plus précisément, encore, dans la forme de réalisation représentée, chacun des longerons 24A et 24B du châssis 12 comporte, d'une part, à sa base, c'est-à-dire le long du bord libre de son pan 38, une semelle 40, qui s'étend sensiblement parallèlement au panneau filtrant 13, de part et d'autre de ce pan 38, et dont la partie intérieure forme la nervure 30 correspondante, et, d'autre part, du côté opposé, c'est-à-dire le long du bord libre de son pan 39, un retour 41, qui est dirigé vers l'extérieur, et qui s'étend sensiblement parallèlement à la semelle 40.

Préférentiellement, les longerons 24A et 24B ainsi constitués sont l'un et l'autre en matière inerte à la corrosion.

Par exemple, ils sont en matière composite.

Dans la forme de réalisation représentée, ces longerons 24A et 24B sont, en pratique, des profilés, ou des tronçons de profilé, réalisés par exemple par extrusion.

Les montants 23 du châssis 12 ont, quant à eux, une structure classique, et, pour l'essentiel, ils ne seront pas décrits en détail ici.

Il suffira d'indiquer que, de manière connue en soi, ils forment chacun un flasque 42, pour la délimitation de l'ouverture de l'ensemble, et que, pour l'intervention des moyens d'articulation 22 associés, ils comportent chacun, en saillie vers l'extérieur sur ce flasque 42, sensiblement à mi-hauteur de celui-ci, une platine 43, à laquelle le flasque 42 est raccordé de place en place par des nervures de rigidification 44.

Cependant, dans la forme de réalisation représentée, les montants 23 du châssis 12 comportent, chacun, à chacune de leurs extrémités, deux ailes 45 parallèles entre lesquelles est inséré le longeron 24A ou 24B correspondant.

Préférentiellement, ces deux ailes 45, qui s'étendent perpendiculairement au flasque 42, sont d'un seul tenant avec celui-ci.

Dans la forme de réalisation représentée, elles sont conformées en dièdre, à l'image des longerons 24A et 24B.

Préférentiellement, les montants 23 ainsi constitués sont l'un et l'autre en matière inerte à la corrosion.

Par exemple, ils sont en matière synthétique injectée.

Au montage, l'assemblage des longerons 24A et 24B sur les montants 23 peut, par exemple, se faire par boulonnage, à l'aide de boulons 46, tel que représenté, à la faveur des ailes 45.

En variante, et/ou en complément, il peut aussi se faire par collage.

Après cet assemblage, le panneau filtrant 13 est mis en place.

Par exemple, et tel que représenté en traits continus sur la figure 5, il est engagé, de biais, dans l'ouverture du châssis 12, jusqu'à ce que, par les pattes d'encliquetage 26 situées le long d'un de ses côtés, il vienne en prise avec la nervure 30 du longeron correspondant de ce châssis 12.

Le panneau filtrant 13 est ensuite pivoté autour de cette nervure 30, suivant la flèche F2 de la figure 5, jusqu'à ce que, par les pattes d'encliquetage 26 situées de son côté opposé au précédent, il vienne également en prise avec la nervure 30 de l'autre longeron de ce châssis 12, tel que schématisé en traits interrompus sur cette figure 5.

Ainsi qu'il est aisé de le comprendre, le dièdre que forme les pans 38, 39 de ce longeron est choisi de manière à être compatible, au mieux, avec le trajet alors suivi par le panneau filtrant 13 eu égard à sa rigidité.

Quoi qu'il en soit, il résulte de ce dièdre un resserrement de l'ouverture du châssis 12 du côté du bord libre de celui-ci, et ce resserrement est favorable à la fonction d'augets des caissons de filtration 1 1.

Il en est d'autant plus ainsi que, pour des raisons de standardisation, les deux longerons 24A et 24B du châssis 12 sont préférentiellement identiques entre eux, comme représenté, et qu'ils ont donc un même profil transversal ; toutefois, comme on le comprend aisément, les deux longerons 24A et 24B ne sont pas nécessairement identiques ; de plus, il suffit qu'un seul de ces longerons, ici le longerons 24A, ait le profil transversal 38, 39 décrit.

Bien entendu, au lieu de résulter de pans successifs 38 et 39, ce profil transversal peut être courbe.

En pratique, pour chacun des caissons de filtration 11 du tamis mécanique 10 constitué de tels caissons de filtration 11, les longerons 24A et 24B du châssis 12 s'étendent transversalement par rapport au tablier filtrant que forme alors ce tamis mécanique 10, c'est-à-dire transversalement par rapport au sens de déplacement de ce tablier filtrant.

En service, lorsqu'il est dans le flux d'eau 16, le panneau filtrant 13 de ces caissons de filtration 11 résiste à la poussée due à la perte de charge à travers lui par appui sur les nervures 30 du châssis 12, et, lorsqu'il est soumis au dispositif de nettoyage 20, il résiste à la poussée due au jet d'eau 21 par la retenue assurée par ses pattes d'encliquetage 26.

Bien entendu, la présente invention ne se limite pas à la forme de réalisation décrite et représentée, mais englobe toute variante d'exécution.

En particulier, les deux longerons 24A et 24B du panneau filtrant 13 qui a été décrit portent des moyens d'encliquetage ; l'invention s'applique également lorsque les moyens d'encliquetage 25 n'intéressent qu'un seul de ces deux longerons, l'autre longeron comportant une lèvre, ou une rainure, adaptée à coopérer avec une rainure, ou une lèvre, ménagée le long du côté 33 correspondant, en regard du cadre 31.

Le panneau filtrant 13 qui a été décrit présente un cadre 31 à l'intérieur duquel est formé un réseau tridimensionnel 35 d'ouvertures 36 ; la figure 9 illustre une variante de panneau filtrant : ici, le panneau filtrant 113 présente un cadre 131 dont les côtés 132 et 133 sont analogues aux côtés 32 et 33 du cadre 31 du panneau filtrant 13 ; le cadre 131 est compartimenté par des séparations 114 s'étendant, parallèlement aux côtés 133, depuis un côté 132 à l'autre ; chaque compartiment ainsi défini reçoit une toile 115, par exemple tissée en polyester ou métallique, fixée par son pourtour par surmoulage du cadre 131 et de ses séparations 114. Grâce à cette disposition, il est possible de doter le panneau filtrant 113 d'ouvertures ou mailles fines, par exemple inférieures ou égales à 4 millimètres.

## Revendications

1. Tamis mécanique du genre mettant en oeuvre au moins un caisson de filtration (11) comportant, d'une part, un châssis (12), qui est en forme générale de cadre, et, d'autre part, un panneau filtrant (13,113), qui est interposé transversalement dans l'ouverture de ce châssis (12), en étant dûment assujetti à celui-ci, caractérisé en ce que, pour l'assujettissement du panneau filtrant (13,113) au châssis (12), interviennent, entre ce panneau filtrant (13,113) et ce châssis (12), des moyens d'encliquetage (25).

2. Tamis mécanique suivant la revendication 1, caractérisé en ce que les moyens d'encliquetage (25) intervenant entre le panneau filtrant (13,113) et le châssis (12) comportent, sur l'un de ces éléments panneau filtrant (13,113) ou châssis (12), au moins une patte d'encliquetage (26), qui, présentant un cran (27), est globalement conformée en crochet, et, sur l'autre de ces éléments (12,26), un épaulement (29), avec lequel est en prise par le cran (27) l'élément muni de sa patte d'encliquetage (26).

3. Tamis mécanique suivant la revendication 2, caractérisé en ce que la patte d'encliquetage (26) est portée par le panneau filtrant (13,113) et l'épaulement (29) est ménagé sur le châssis (12).

4. Tamis mécanique suivant la revendication 3, caractérisé en ce que la patte d'encliquetage (26) du panneau filtrant (13,113) est en retrait par rapport à l'un des côtés de ce panneau filtrant (13,113), et l'épaulement (29) du châssis (12) appartient à une nervure (30), qui fait saillie vers l'intérieur dans l'ouverture de ce châssis (12), sur le côté correspondant de celui-ci, et sur laquelle le panneau filtrant (13,113) prend appui.

5. Tamis mécanique suivant l'une quelconque des revendications 3 ou 4, caractérisé en ce que, le panneau filtrant (13,113) ayant, en plan, un contour quadrangulaire, il comporte quatre pattes d'encliquetage (26), qui, par paire, sont disposées aux extrémités de deux de ses côtés opposés, tout en étant en retrait par rapport à ceux-ci.

6. Tamis mécanique suivant la revendication 5, caractérisé en ce que, le panneau filtrant (13,113) présentant un cadre (31,131) à sa périphérie, les pattes d'encliquetage (26) qu'il comporte appartiennent à ce cadre (31,131).

7. Tamis mécanique suivant l'une quelconque des revendications 1 à 6, caractérisé en ce que, le châssis (12) ayant, en plan, un contour quadrangulaire, en comportant, en alternance, deux montants (23) et deux longerons (24A,24B), les moyens d'encliquetage (25) intervenant entre le panneau filtrant (13,113) et ce châssis (12) concernent au moins un longeron (24A,24B) de ce châssis (12).

8. Tamis mécanique suivant la revendication 7, caractérisé en ce que les longerons (24A,24B) du châssis (12) ont, en section transversale, un profil globalement cintré dont la concavité est tournée vers l'intérieur de ce châssis (12).

9. Tamis mécanique suivant la revendication 8, caractérisé en ce que, à compter du panneau filtrant (13,113), chacun des longerons (24A,24B) du châssis (12) comporte, successivement, en dièdre, un premier pan (38), qui s'étend sensiblement perpendiculairement au panneau filtrant (13,113), et un deuxième pan (39), qui, oblique par rapport au panneau filtrant (13,113), va en convergeant avec le deuxième pan (39) de l'autre longeron (24) au fur et à mesure qu'il s'éloigne du panneau filtrant (13,113).

10. Tamis mécanique suivant l'une quelconque des revendications 7 à 9, caractérisé en ce que les moyens d'encliquetage (25) intervenant entre le panneau filtrant (13,113) et le châssis (12) n'intéressent que les seuls longerons (24A,24B) de ce châssis (12).

11. Tamis mécanique suivant l'une quelconque des revendications 7 à 10, caractérisé en ce que les montants (23) du châssis (12) comportent, chacun, à chacune de leurs extrémités, deux ailes (45) entre lesquelles est inséré le longeron (24A,24B) correspondant.

12. Tamis mécanique suivant l'une quelconque des revendications 7 à 11, caractérisé en ce que les montants (23) du châssis (12) sont l'un et l'autre en matière inerte à la corrosion, et, par exemple, en matière synthétique injectée.

13. Tamis mécanique suivant l'une quelconque des revendications 7 à 12, caractérisé en ce que les longerons (24A,24B) du châssis (12) sont l'un et l'autre en matière inerte à la corrosion, et, par exemple, en matière composite.

14. Tamis mécanique suivant la revendication 13, caractérisé en ce que les longerons (24A,24B) du châssis (12) sont l'un et l'autre des profilés.

15. Tamis mécanique suivant l'une quelconque des revendications 1 à 14, caractérisé en ce que le cadre (31,131) du panneau filtrant (13,113) est en matière inerte à la corrosion, et, par exemple, en matière synthétique moulée.

16. Tamis mécanique suivant la revendication 15, caractérisé en ce qu'un réseau tridimensionnel (35) d'ouvertures (36) est défini à l'intérieur du cadre (31).

17. Tamis mécanique suivant la revendication 15, caractérisé en ce que le cadre (131) supporte une toile (115).

18. Tamis mécanique suivant l'une quelconque des revendications 1 à 17, caractérisé en ce que, comportant une pluralité de caissons de filtration (11) successivement articulés en boucle sans fin les uns aux autres, il forme le tablier filtrant d'un filtre à chaînes (14).

19. Tamis mécanique suivant la revendication 18, caractérisé en ce que, chacun de ses caissons de filtration (11) étant conformes à la revendication 6, les longerons (24A,24B) de leur châssis (12) s'étendent transversalement par rapport au tablier filtrant qu'il forme.
